# EUROPÄISCHE PATENTSCHRIFT

(11) **EP 1 721 788 B1**
(45) Veröffentlichungstag und Bekanntmachung des Hinweises auf die Patenterteilung: **24.08.2011**
(21) Anmeldenummer: 05290897.7
(22) Anmeldetag: 22.04.2005
(51) Int. Cl.: B60R 21/20

(54) **Befestigungselement zum Anbringen und Rückhalten eines Airbags an einer Fahrzeugkarosserie**
Fastening element for fastening and restraining an airbag on a vehicle body
Elément de fixation pour fixé et retenir un airbag dans une carrosserie de véhicule automobile

(43) Veröffentlichungstag der Anmeldung: 15.11.2006
(73) Patentinhaber: Lisi Automotive Rapid, 95650 Puiseux Pontoise (FR); Bayerische Motoren Werke Aktiengesellschaft, 80809 München (DE)
(72) Erfinder: Demel, Otto, 69123 Heidelberg (DE); Schröter, Rainer, 85293 Reicherthausen (DE); Kolb, Walter, 69214 Eppelheim (DE)
(74) Vertreter: Thinat, Michel

(56) Entgegenhaltungen:
- EP-A- 1 209 042
- EP-A- 1 502 828
- DE-A1- 19 752 989
- US-B1- 6 209 907
- US-B1- 6 224 091

## Beschreibung

Die vorliegende Erfindung betrifft ein Befestigungselement zum Anbringen und Rückhalten eines Airbags an einer Fahrzeugkarosserie.

Kraftfahrzeuge werden nun schon seit einiger Zeit mit Airbags ausgerüstet, anfangs nur zum Schutz des Fahrers, dann auch zum Schutz des Beifahrers. Dabei beschränkte sich der Schutz jedoch lange Zeit nur auf die Auswirkungen eines Frontalaufpralls. Die Airbags waren dabei in der Lenksäule und später auch an Stelle des Handschuhfachs angeordnet und hatten die Aufgabe, den Oberkörper und den Kopf des Fahrers und dann auch des Beifahrers bei einem Frontalaufprall vor einem Vorschnellen zu bewahren.

Seit kurzem werden Kraftfahrzeuge auch mit Airbags ausgerüstet, die den seitlichen Schutz der Insassen sicherstellen sollen. Dabei gibt es neben individuellen Seitenairbags nun auch so genannte Gardinenairbags, die an einem oberen seitlichen Holm einer Fahrzeugkarosserie angebracht sind und Schutz für einen oder mehrere hintereinander liegende Sitzplätze gewähren. Diese Airbags können im zusammengefalteten Zustand eine Einbaulänge von bis zu etwa 2 m haben und sind mit mehreren Befestigungselementen an dem betreffenden Holm angebracht.

Die Druckschrift EP-A-1 502 828 beschreibt einen Clip, mit dem ein solcher Gardinenairbag an einer Fahrzeugkarosserie befestigt werden kann. Dieser Clip ist im wesentlichen zweiteilig ausgeführt. Ein erstes hülsenartiges Teil ist so ausgelegt, daß es durch eine in die Karosserie eingebrachte Öffnung gesteckt werden kann und die Karosserie hintergreift. Dann wird eine Befestigungslasche des Airbags auf die Öffnung aufgelegt und ein mit einer Durchgangsbohrung versehener Montageflansch auf die Lasche des Airbags aufgesetzt. Abschließend wird in die Durchgangsbohrung des Montageflansches und weiter in die Öffnung der Karosserie ein stiftartiges, komplex geformtes zweites Teil des Clips eingedrückt, das zumindest bewirkt, daß das hülsenförmige erste Clipteil nicht aus der Öffnung in der Karosserie entweichen kann. Wenn der Airbag mit mehreren Clips befestigt werden soll, dann kann sich der Montageflansch über mehrere Öffnungen erstrecken.

Das Montieren eines Gardinenairbags mit dem bekannten Clip und die damit verbundene Montageart erfordern Übung und im Regelfall, wegen der geringen zur Verfügung stehenden Montagezeit, einen zweiten Monteur, der den Airbag in der Montageposition festhält, während der erste Monteur die stiftartigen Clipteile in die zuvor in einem ersten Montagegang eingebrachten hülsenartigen Clipteile eindrückt.

Aufgabe der Erfindung ist es, ein Befestigungselement anzugeben, das eine einfachere und insbesondere von einem einzigen Monteur durchführbare Montage ermöglicht. Dabei sollte nach Möglichkeit auch eine gleichmäßige und faltenfreie Unterbringung des Airbags erzielt werden.

Ein gattungsgemässes Befestigungselement ist aus DE-A-197 52 989 bekannt.

Die Aufgabe der Erfindung wird mit einem Befestigungselement nach Patentanspruch 1 gelöst.

Vorteilhafte Ausbildungen des erfindungsgemäßen Befestigungselements sind Gegenstand von Unteransprüchen.

Das erfindungsgemäße Befestigungselement ist so ausgebildet, daß es nicht nur zum Anbringen eines Airbags an einer Fahrzeugkarosserie dient, sondern auch zum Rückhalten desselben, daß es also den gefalteten Airbag sicher festhält, bis er ausgelöst wird. Außerdem ist das Befestigungselement so ausgebildet, daß es am Airbag vormontiert werden kann und ein einziger Monteur somit in der Lage ist, den Airbag schnell und gleichmäßig, insbesondere faltenfrei, an einer Fahrzeugkarosserie anzubringen.

Die vorstehenden Merkmale und Vorteile des erfindungsgemäßen Befestigungselements beruhen darauf, daß es ein im wesentlichen flaches erstes Elementeteil zum mittelbaren Befestigen des Airbags an der Fahrzeugkarosserie und ein darüber angeordnetes im wesentlichen bügelförmiges zweites Elementeteil zum Rückhalten des Airbags zwischen den beiden Elementeteilen aufweist, wobei das erste Elementeteil und das zweite Elementeteil gemeinsam ein offenes und ein geschlossenes Ende des Befestigungselements bilden. Des weiteren weist das Befestigungselement Haltemittel auf, die in wenigstens einem der beiden Elementeteile ausgebildet sind und an denen der Airbag verliersicher eingehängt werden kann.

Das erfindungsgemäße Befestigungselement kann einstückig gefertigt sein, es kann aber auch ein vom zweiten Elementeteil getrenntes erstes Elementeteil aufweisen. Des weiteren kann das Befestigungselement aus Metall oder aus Kunststoff gefertigt sein. Es kann aber auch, wenn es nicht einstückig gefertigt ist, ein Elementeteil aus Metall und ein Elementeteil aus Kunststoff aufweisen.

Wenn das Befestigungselement zur Vormontage angeliefert wird, ist das offene Ende des Befestigungselements hinreichend weit geöffnet, um einen gefalteten Airbag problemlos einbringen zu können. Dabei ist der Airbag in der Regel in einer dünnen, durch den Befüllungsdruck leicht zerreißbaren Hülle enthalten und weist eine Befestigungslasche auf, mittels derer der Airbag an den am Befestigungselement ausgebildeten Haltemitteln eingehängt wird. Die Haltemittel sind je nach Art des Clips als ausgestanzte Nasen, Verrastungszungen oder sonstige aus dem ersten oder zweiten Elementeteil hervorstehende Ausstanzungen oder Ausprägungen ausgebildet. Sie können aber auch in Form von zusätzlichen Hülsen oder Nieten vorliegen. Bei manchen Ausführungsformen dienen die Haltemittel, wenigstens teilweise, auch zum Zusammenhalten des Clips nach erfolgtem Einlegen eines Airbags.

Um der doppelten Funktion des Befestigens und des Rückhaltens bei gleichzeitig einfacher Montage möglichst einfach gerecht zu werden, sind die beiden Elementeteile des Befestigungselements vorteilhafterweise am geschlossenen Ende durch zwei im wesentlichen gleich geformte und eine gemeinsame Kante bildende Ansätze miteinander verbunden. Bei einstückiger Ausführung des Befestigungselements aus Metall ist diese gemeinsame Kante eine Falzkante und bei einstückiger Ausführung aus Kunststoff ist diese gemeinsame Kante ein Filmscharnier oder eine die relative Elastizität der beiden Elementeteile zueinander fördernde Verbindung.

Die einstückige Ausführung hat gegenüber der zweiteiligen Ausführung den Vorteil, am Befestigungselement einfache Haltemittel ausbilden zu können, die die beiden Elementeteile im zusammengedrückten Zustand, nachdem ein Airbag eingesetzt worden ist, sicher zusammenhalten, damit der Airbag nicht aus dem Befestigungsmittel herausrutscht. Bei einer zweiteiligen Ausführung müssen noch zusätzliche Mittel oder Formgebungen vorgesehen werden, die die beiden Elementeteile zusammenhalten. Beide Ausführungsarten ermöglichen aber, , am Befestigungselement Montagemittel anzubringen oder auszubilden, mittels derer das am Airbag vormontierte Befestigungselement einfach an der Fahrzeugkarosserie angebracht werden kann, ohne daß derartige Montagemittel - zum Beispiel Käfigmuttern - zuvor an der Karosserie vormontiert werden müssen.

Eine Ausgestaltung des erfindungsgemäßen Befestigungselements ohne diese Ansätze ist grundsätzlich auch möglich. Jedoch bedeutet dies, daß die Montagemittel am ersten Elementeteil unterhalb des zweiten Elementeteils angebracht oder ausgebildet werden müssen und daß damit die Zugänglichkeit des Montagemittels, insbesondere bei der weiter unten beschriebenen Ausführung des Befestigungselements mit Käfigmutter, wesentlich schlechter ist. Eine solche Ausgestaltung wird daher nur dann vorteilhaft sein, wenn für das Anbringen des Airbags und insbesondere für die vormontierten Befestigungselemente extrem wenig Platz vorhanden ist.

Das erfindungsgemäße Befestigungselement wird nachstehend in zwei verschiedenen Ausführungsformen beschrieben. Die erste Ausführungsform erfordert eine Verschraubung des Befestigungselements an der Fahrzeugkarosserie, während die zweite Ausführungsform eine reine Clip-Ausführung ist.

Bei der ersten Ausführungsform des Befestigungselements sind die beiden Ansätze im wesentlichen flach ausgebildet und mit einer beide Ansätze durchdringenden Bohrung versehen. Der Ansatz des ersten Elementeteils weist auf der vom anderen Ansatz abgewandten Seite eine aus dem Befestigungselement hervorragende und sich auf einer zum ersten Elementeteil im wesentlichen parallelen Ebene erstreckende Zunge auf, die mit einer Käfigmutter versehen ist. Dabei ist der Abstand zwischen dem ersten Elementeteil und der Zunge etwa so gewählt, daß er der Dicke des Karosserieblechs an der Stelle entspricht, an der das Befestigungselement angebracht werden soll. Denn beim Anbringen des Befestigungselements wird die Zunge des Befestigungselements durch eine dafür vorgesehene Öffnung in der Fahrzeugkarosserie geschoben, so daß sie auf der Rückseite des Karosserieblechs aufliegt und das Befestigungselement somit das Karosserieblech zwischen dem ersten Elementeteil und der Zunge einschließt. Beim anschließenden Einsetzen einer Schraube durchdringt diese dann die beiden Ansätze des zweiten und des ersten Elementeteils, das Karosserieblech und die dazwischen liegende Lasche des Airbags und abschließend die Zunge, bevor sie in die Käfigmutter eindringt.

Die Gardinenairbags werden in der Regel an im wesentlichen vertikalen Flächen der Karosserie angebracht. Damit nun ein in eine dafür vorgesehene Öffnung der Fahrzeugkarosserie eingesetztes Befestigungselement, bei dem sich die die Käfigmutter tragende Zunge zur gemeinsamen Kante der Ansätze hin erstreckt, nicht wieder aus der Öffnung herausrutscht und damit der Monteur insbesondere bei einem Airbag mit mehreren solchen vormontierten Befestigungselementen zunächst alle Befestigungselemente in die dafür vorgesehenen Öffnungen einsetzen kann, bevor er die Schrauben eine nach der anderen einsetzt und festschraubt, weist das erste Elementeteil eine vom zweiten Elementeteil abgewandte und sich entgegen der Zunge erstreckende Verrastungszunge auf, die sich nach erfolgtem Einsetzen des Befestigungselements in die dafür vorgesehene Öffnung an dem entsprechenden, der Käfigmutter gegenüberliegenden Rand der Öffnung einrastend abstützt.

Vorteilhafterweise, aber nicht notwendigerweise kann das freie Ende des ersten Elementeteils vom zweiten Elementeteil weg abgewinkelt sein.

In weiterer Ausgestaltung der ersten Ausführungsform des erfindungsgemäßen Befestigungselements weist das erste Elementeteil zwei zum zweiten Elementeteil gerichtete Nasen auf, die nach Einsetzen eines Airbags in das Befestigungselement und nach Zusammendrücken der beiden Elementeteile in zwei entsprechende Aussparungen des zweiten Elementeteils eingreifen und zum Zwecke des Zusammenhaltens der beiden Elementeteile verbiegbar sind. Dabei können die beiden Nasen gleichzeitig auch zum Befestigen des Airbags am Befestigungselement bzw. zum Vormontieren des Befestigungselements am Airbag dienen. Hierzu wird die weiter oben erwähnte, an der Airbaghülle ausgebildete Lasche auf die Nasen aufgespießt oder mittels vorgefertigter Löcher an den Nasen aufgehängt. Dann werden die beiden Elementeteile zusammengedrückt und die Nasen umgebogen, um die beiden Elementeteile zusammengedrückt zu halten. Diese Nasen aufweisende Konzeption kann erfindungsgemäß auch bei der nachstehend beschriebenen zweiten und bei weiteren Ausführungsformen angewendet werden.

Gemäß einer anderen Ausgestaltung des Befestigungselements weist das zweite Elementeteil wenigstens zwei, vorteilhafterweise vier zum ersten Elementeteil gerichtete Nasen auf, die nach Einsetzen des Airbags in das Befestigungselement und nach Zusammendrücken der beiden Elementeteile auf dem ersten Elementeteil fest aufliegen und so eine zwischen die beiden Elementeteile eingebrachte Lasche des Airbags festhalten. Auch diese Konzeption kann bei beiden hier beschriebenen und bei weiteren Ausführungsformen angewendet werden.

Bei der zweiten Ausführungsform, die eine reine Clipausführung ist, weist das Befestigungselement am offenen Ende eine das erste Elementeteil abgewinkelt verlängernde und vom zweiten Elementeteil weggerichtete Verrastungsklammer auf. Diese Verrastungsklammer weist zwei V-förmig zueinander angeordnete, eine Federwirkung erzeugende Schenkel auf, die beim Anbringen des Befestigungselements an der Karosserie in eine dafür ausgebildete Öffnung eingeführt werden und dort einrasten. Ferner weisen die beiden Ansätze des ersten und des zweiten Elementeteils jeweils einen Abschnitt auf, von denen sich wenigstens der Abschnitt des Ansatzes des ersten Elementeteils, nach Anbringen des Befestigungselements an der Karosserie, in einer zum ersten Elementeteil parallelen Ebene erstreckt. Der Abstand dieser parallelen Ebene vom ersten Elementeteil ist dabei so bemessen, daß der Abschnitt des Ansatzes des ersten Elementeteils mit dem auf diesem aufliegenden entsprechenden Abschnitt des Ansatzes des zweiten Elementeteils zusammen, nach Einsetzen des geschlossenen Endes des Befestigungselements in eine entsprechende Öffnung der Karosserie, auf der Rückseite des Karosserieblechs aufliegt.

Zur Verriegelung der beiden Elementeteile nach erfolgtem Einsetzen eines Airbags weisen das erste Elementeteil und das zweite Elementeteil in einem an den jeweiligen Ansatz angrenzenden Bereich eine Verrastungszunge auf. Diese beiden Verrastungszungen sind derartig geformt, daß sie nach Einsetzen eines Airbags in das Befestigungselement und nach Zusammendrücken der beiden Elementeteile gemeinsam eine die beiden Elementeteile zusammenhaltende Verrastung bilden.

Bei der hier beschriebenen Ausführungsform weist das erste Elementeteil in einem an den zugehörigen Ansatz angrenzenden Bereich eine erste Verrastungszunge auf, die zum zweiten Elementeteil hin gebogen ist. Des weiteren weist das zweite Elementeteil in einem an den zugehörigen Ansatz angrenzenden Bereich eine sich auf diesen Ansatz zu erstreckende zweite Verrastungszunge und eine Öffnung zum Hindurchführen der ersten Verrastungszunge auf. Die beiden Verrastungszungen sind so geformt, daß sie nach Einsetzen eines Airbags in das Befestigungselement und nach Zusammendrücken der beiden Elementeteile gemeinsam eine die beiden Elementeteile zusammenhaltende Verrastung bilden.

Das Befestigungselement weist zudem am geschlossenen Ende eine über die gemeinsame Kante hinausreichende, zu der vom zweiten Elementeteil abgewandten Seite des ersten Elementeteils hin abgewinkelte Sperrzunge auf, die bei unsachgemäßer Montage des Befestigungselements verhindert, daß eine den Airbag verdeckende Abdeckung auf die Karosserie aufgesetzt werden kann.

Bei dieser vornehmlich die reine Clip-Version betreffenden Maßnahme bilden die Sperrzunge und die am anderen Ende liegende V-förmige Verrastungsklammer jeweils für sich eine selbständige Sicherung gegen nicht korrektes Montieren, und zwareinerseits durch den Abstand zwischen erstem Elementeteil und Karosserie, der durch die Sperrzunge erzwungen wird, wenn das Befestigungselement nicht richtig in das dafür vorgesehene Loch eingeführt worden ist, und andererseits durch das Zurückfedern und Schrägstellen des Befestigungselements, wenn die V-förmige Verrastungsklammer nicht vollständig in das dafür vorgesehene Loch eingeführt worden oder verpreßt worden ist. In beiden Fällen ist eine nachfolgende Montage des Dachhimmels oder einer sonstigen Abdeckung nicht mehr möglich.

Bei nicht korrekter Montage der geschraubten Version lässt sich die Schraube mit Hilfe eines drehmomentkontrollierten Schraubers nicht mehr montieren, da das Drehmoment wegen fehlender Mutter nicht erreicht und als Fehler gemeldet wird.

Das zweite Elementeteil weist vom offenen Ende zum geschlossenen Ende des Befestigungselements verlaufende, einen in das Befestigungselement eingesetzten Airbag schonende, also mindestens gratfreie, am besten aber mit vom ersten Elementeteil weg gerichteter Bördelung versehene Längskanten auf.

Das Befestigungselement kann wahlweise aus einem Metallblech ausgestanzt und durch Faltung hergestellt werden oder aber auch mittels eines Kunststoffspritzverfahrens hergestellt werden.
Figuren 1 bis 3 zeigen ein erfindungsgemäßes Befestigungselement in einer ersten Ausführungsform,
Figur 4 zeigt ein erfindungsgemäßes Befestigungselement in einer zweiten Ausführungsform und
Figuren 5 und 6 zeigen ein erfindungsgemäßes Befestigungselement in einer Variante der zweiten Ausführungsform.

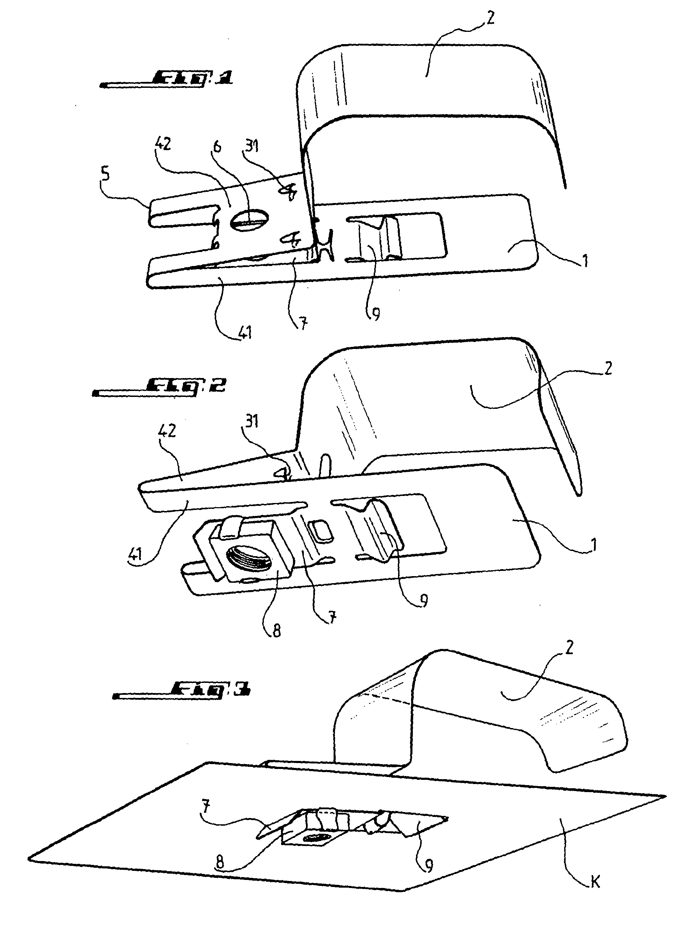

Die Figuren 1 und 2 zeigen ein Befestigungselement in einer ersten erfindungsgemäßen Ausführungsform. Das Befestigungselement weist ein im wesentlichen flaches erstes Elementeteil 1 zum mittelbaren Befestigen des Airbags an der Fahrzeugkarosserie und ein darüber angeordnetes im wesentlichen bügelförmiges zweites Elementeteil 2 zum Rückhalten des Airbags zwischen den beiden Elementeteilen auf. Dabei bilden das erste Elementeteil 1 und das zweite Elementeteil 2 gemeinsam ein offenes und ein geschlossenes Ende des Befestigungselements. In wenigstens einem der beiden Elementeteile sind Haltemittel 31 ausgebildet, dank derer das Befestigungselement am Airbag verliersicher vormontiert werden kann. Die beiden Elementeteile 1, 2 sind an dem geschlossenen Ende durch zwei im wesentlichen gleich geformte und gemeinsam eine Falzkante 5 bildende im wesentlichen flach ausgebildete Ansätze 41, 42 miteinander verbunden.

Die beiden Ansätze 41, 42 sind mit einer beide Ansätze durchdringenden Bohrung 6 versehen, wobei der Ansatz 41 des ersten Elementeteils 1 eine aus dem Befestigungselement hervorragende und sich auf einer zum ersten Elementeteil 1 im wesentlichen parallelen Ebene erstreckende Zunge 7 aufweist, die auf der vom anderen Ansatz 42 abgewandten Seite mit einer Käfigmutter 8 versehen ist. Ferner weist das erste Elementeteil 1 eine vom zweiten Elementeteil 2 abgewandte und sich von der Käfigmutter 8 weg erstreckende Verrastungszunge 9 auf.

Die Figur 3 zeigt das Befestigungselement der Figuren 1 und 2 nach Einsetzen desselben in eine Fahrzeugkarosserie K. Dabei bestätigt die Figur 3 einen wesentlichen Vorteil des erfindungsgemäßen Befestigungselements, der bereits aus Figur 2 hervorgeht: die für die Befestigung des Befestigungselements in dieser Ausführungsform erforderliche Mutter ist als Käfigmutter 8 am Befestigungselement angebracht und braucht also nicht zuvor in einem gesonderten Arbeitsgang an der Karosserierückseite angebracht zu werden. Ein weiterer Vorteil ist, daß das Befestigungselement durch die Verrastungszunge 9 bereits vor Verschraubung in der Karosserieaussparung festgehalten wird und so die Montage des Airbags erleichtert.

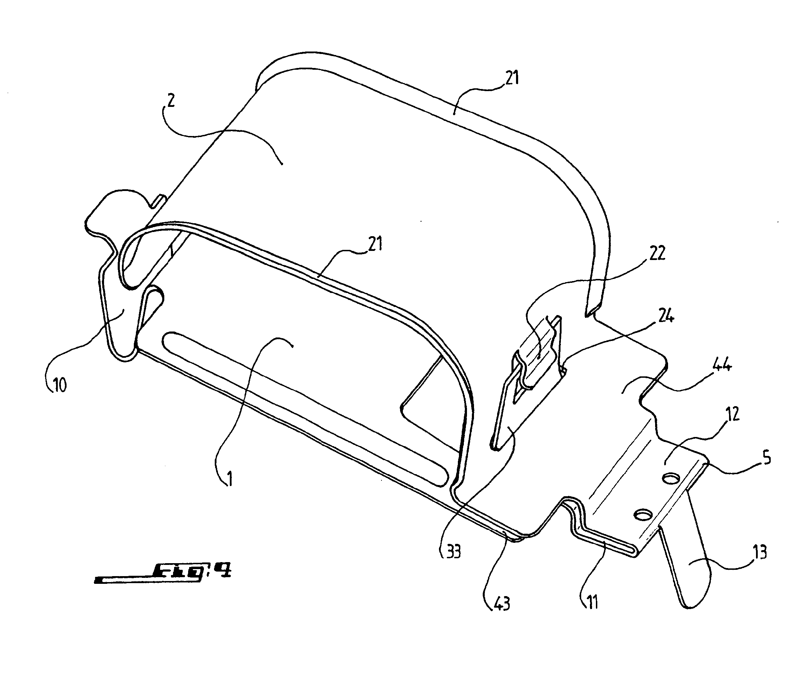

Die Figur 4 zeigt ein Befestigungselement in einer zweiten erfindungsgemäßen Ausführungsform. Das Befestigungselement weist - wie das zuvor beschriebene Befestigungselement - ein im wesentlichen flaches erstes Elementeteil 1 und ein darüber angeordnetes, im wesentlichen bügelförmiges und an den Längskanten Bördelungen 21 aufweisendes zweites Elementeteil 2, sowie Haltemittel 33 auf, dank derer das Befestigungselement am Airbag verliersicher vormontiert werden kann. Die beiden Elementeteile 1, 2 sind an dem geschlossenen Ende durch zwei im wesentlichen gleich geformte und gemeinsam eine Falzkante 5 bildende, im wesentlichen flach ausgebildete Ansätze 43, 44 miteinander verbunden.

Das Befestigungselement weist ferner am offenen Ende eine das erste Elementeteil 1 abgewinkelt verlängernde und vom zweiten Elementeteil 2 weggerichtete Verrastungsklammer 10 auf und die beiden Ansätze 43, 44 des ersten und des zweiten Elementeteils weisen jeweils einen Abschnitt 11, 12 auf, von denen sich wenigstens der Abschnitt 11 des Ansatzes 43 des ersten Elementeteils 1, nach Anbringen des Befestigungselements an der Karosserie, in einer zum ersten Elementeteil parallelen Ebene erstreckt.

Zum Verrasten der beiden Elementeteile 1, 2 weisen diese je eine Verrastungszunge 33, 22 auf, wobei die Verrastungszunge 22 aus dem zweiten Elementeteil 2 ausgestanzt und zur Aufnahme der Verrastungszunge 33 ausgeformt ist. Die Verrastungszunge 33 ist aus dem ersten Elementeteil 1 ausgestanzt und so geformt, daß sie durch eine im zweiten Elementeteil 2 dafür vorgesehene Öffnung 24 hindurch geführt wird und unter die Verrastungszunge 22 geschoben wird, welche dann in der Verrastungszunge 33 einrastet. Die beiden Verrastungszungen 33, 22 sind also derartig geformt, daß sie nach Einsetzen eines Airbags in das Befestigungselement und nach Zusammendrücken der beiden Elementeteile gemeinsam eine die beiden Elementeteile zusammenhaltende Verrastung bilden.

Das Befestigungselement weist ferner am geschlossenen Ende eine über die Falzkante 5 hinausreichende, zu der vom zweiten Elementeteil 2 abgewandten Seite des ersten Elementeteils 1 hin abgewinkelte Sperrzunge 13 auf, die bei unsachgemäßer Montage des Befestigungselements verhindert, daß eine den Airbag verdeckende Abdeckung auf die Karosserie aufgesetzt werden kann. Wenn also beispielsweise nur die Verrastungsklammer 10 in der dafür vorgesehenen Aussparung der Karosserie eingerastet ist, erzeugt die Länge der Sperrzunge 13 eine zu große Einbauhöhe des Befestigungselements und verhindert so ein Befestigen der Abdeckung.

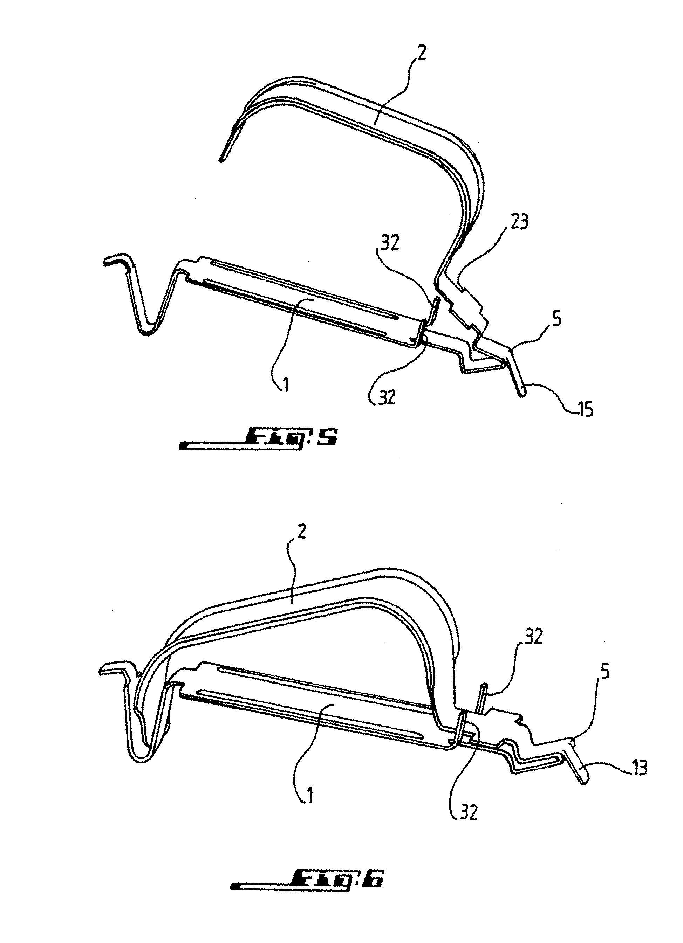

Die Figuren 5 und 6 zeigen eine Variante des Befestigungselements nach Figur 4 mit der Öffnungsweite vor Einsetzen eines Airbags (Fig. 5) bzw. nach Zusammendrücken der beiden Elementeteile, wenn kein Airbag eingesetzt ist. Figur 6 zeigt auf diese Weise die Vorspannung, mit der der Airbag im Befestigungselement festgehalten wird.

Die Figuren 5 und 6 zeigen Haltemittel 32 zum Befestigen eines Airbags am Befestigungselement. Diese Haltemittel, in Form von Nasen, greifen nach Einsetzen des Airbags in das Befestigungselement und nach Zusammendrücken der beiden Elementeteile 1, 2 in zwei entsprechende Aussparungen oder Absätze 23 des zweiten Elementeteils 2 ein und werden dann zum Zwecke des Zusammenhaltens der beiden Elementeteile in vorbestimmter Richtung, im wesentlichen auf die Kante 5 zu, verbogen.

## Patentansprüche

1. Befestigungelement zum Anbringen und Rückhalten eines Airbags an einer Fahrzeugkarosserie, wobei das Befestigungselement ein im wesentlichen flaches erstes Elementeteil (1) zum mittelbaren Befestigen des Airbags an der Fahrzeugkarosserie und ein darüber angeordnetes im wesentlichen bügelförmiges zweites Elementeteil (2) zum Rückhalten des Airbags zwischen den beiden Elementeteilen (1, 2) aufweist und das erste Elementeteil (1) und das zweite Elementeteil (2) gemeinsam ein offenes und ein geschlossenes Ende des Befestigungselementes bilden, **dadurch gekennzeichnet, dass** in wenigstens einem der beiden Elementeteile Haltemittel (31; 32; 33) ausgebildet sind, an denen der Airbag verliersicher eingehängt werden kann.

2. Befestigungselement nach Anspruch 1, **dadurch gekennzeichnet, daß** die beiden Elementeteile (1, 2) an dem geschlossenen Ende durch zwei im wesentlichen gleich geformte und eine gemeinsame Kante (5) bildende Ansätze (41, 42; 43, 44) miteinander verbunden sind.

3. Befestigungselement nach Anspruch 1 oder 2, **dadurch gekennzeichnet, daß** die beiden Ansätze (41, 42) im wesentlichen flach ausgebildet sind und mit einer beide Ansätze durchdringenden Bohrung (6) versehen sind, wobei der Ansatz (41) des ersten Elementeteils (1) eine aus dem Befestigungselement hervorragende und sich auf einer zum ersten Elementeteil (1) im wesentlichen parallelen Ebene erstreckende Zunge (7) aufweist und die Zunge (7) auf der vom anderen Ansatz (42) abgewandten Seite mit einer Käfigmutter (8) versehen ist.

4. Befestigungselement nach Anspruch 3, **dadurch gekennzeichnet, daß** das erste Elementeteil (1) eine vom zweiten Elementeteil (2) abgewandte und sich von der Käfigmutter (8) weg erstreckende Verrastungszunge (9) aufweist.

5. Befestigungselement nach Anspruch 3 oder 4, **dadurch gekennzeichnet, daß** das erste Elementeteil (1) am offenen Ende des Befestigungselements vom zweiten Elementeteil (2) weg abgewinkelt ist.

6. Befestigungselement nach einem der Ansprüche 3 bis 5, **dadurch gekennzeichnet, daß** das erste Elementeteil (1) zwei zum zweiten Elementeteil (2) gerichtete Nasen (32) aufweist, die nach Einsetzen eines Airbags in das Befestigungselement und nach Zusammendrücken der beiden Elementeteile (1, 2) in zwei entsprechende Aussparungen (23) des zweiten Elementeteils (2) eingreifen und zum Zwecke des Zusammenhaltens der beiden Elementeteile verbiegbar sind.

7. Befestigungselement nach einem der Ansprüche 3 bis 5, **dadurch gekennzeichnet, daß** das zweite Elementeteil (2) wenigstens zwei zum ersten Elementeteil (1) gerichtete Nasen (31) aufweist, die nach Einsetzen des Airbags in das Befestigungselement und nach Zusammendrücken der beiden Elementeteile (1, 2) auf dem ersten Elementeteil (1) fest aufliegen.

8. Befestigungselement nach Anspruch 1 oder 2, **dadurch gekennzeichnet, daß** es am offenen Ende eine das erste Elementeteil (1) abgewinkelt verlängernde und vom zweiten Elementeteil (2) weg gerichtete Verrastungsklammer (10) aufweist und daß die beiden Ansätze (43, 44) des ersten (1) und des zweiten (2) Elementeteils jeweils einen Abschnitt (11, 12) aufweisen, von denen sich wenigstens der Abschnitt (11) des Ansatzes (43) des ersten Elementeteils (1), nach Anbringen des Befestigungselements an der Karosserie, in einer zum ersten Elementeteil (1) parallelen Ebene erstreckt.

9. Befestigungselement nach Anspruch 8, **dadurch gekennzeichnet, daß** das erste Elementeteil (1) und das zweite Elementeteil (2) in einem an den jeweiligen Ansatz angrenzenden Bereich eine Verrastungszunge (33, 22) aufweisen, wobei die beiden Verrastungszungen derartig geformt sind, daß sie nach Einsetzen eines Airbags in das Befestigungselement und nach Zusammendrücken der beiden Elementeteile gemeinsam eine die beiden Elementeteile (1, 2) zusammenhaltende Verrastung bilden.

10. Befestigungselement nach Anspruch 8 oder 9, **dadurch gekennzeichnet, daß** das erste Elementeteil (1) in einem an den zugehörigen Ansatz (43) angrenzenden Bereich eine erste Verrastungszunge (33) aufweist, die zum zweiten Elementeteil (2) hin gebogen ist und daß das zweite Elementeteil (2) in einem an den zugehörigen Ansatz angrenzenden Bereich eine sich auf diesen Ansatz zu erstreckende zweite Verrastungszunge (22) und eine Öffnung (24) zum Hindurchführen der ersten Verrastungszunge (33) aufweist, wobei die beiden Verrastungszungen (33, 22) so geformt sind, daß sie nach Einsetzen eines Airbags in das Befestigungselement und nach Zusammendrücken der beiden Elementeteile gemeinsam eine die beiden Elementeteile (1, 2) zusammenhaltende Verrastung bilden.

11. Befestigungselement nach einem der Ansprüche 8 bis 10, **dadurch gekennzeichnet, daß** es am geschlossenen Ende eine über die gemeinsame Kante (5) hinausreichende, zu der vom zweiten Elementeteil (2) abgewandten Seite des ersten Elementeteils (1) hin abgewinkelte Sperrzunge (13) aufweist, die bei unsachgemäßer Montage des Befestigungselements verhindert, daß eine den Airbag verdeckende Abdeckung auf die Karosserie aufgesetzt werden kann.

12. Befestigungselement nach einem der Ansprüche 1 bis 11, **dadurch gekennzeichnet, daß** das zweite Elementeteil (2) vom offenen Ende zum geschlossenen Ende des Befestigungselements verlaufende, einen in das Befestigungselement eingesetzten Airbag schonende, also mindestens gratfreie oder vom ersten Elementeteil (1) weg gerichtete Bördelungen (21) aufweisende Längskanten aufweist.

13. Befestigungselement nach einem der Ansprüche 1 bis 12, **dadurch gekennzeichnet, daß** es ein aus einem Metallblech ausgestanztes und durch Faltung erhaltenes einstückiges Befestigungselement ist.

14. Befestigungselement nach einem der Ansprüche 1 bis 12, **dadurch gekennzeichnet, daß** es ein mittels eines Kunststoffspritzverfahrens erhaltenes einstückiges Befestigungselement ist.

15. Befestigungselement nach einem der Ansprüche 1 bis 12, **dadurch gekennzeichnet, daß** eins der beiden Elementeteile (1, 2), also das erste oder das zweite Elementeteil, aus Kunststoff gefertigt ist und daß das andere Elementeteil, also das zweite oder das erste Elementeteil, aus Metall gefertigt ist.

## Claims

1. Fastening element for fastening and retaining an airbag on a vehicle body, wherein the fastening element comprises a substantially flat first element part (1) for indirectly fastening the airbag to the vehicle body and a substantially U-shaped second element part (2) arranged thereabove for retaining the airbag between the two element parts (1, 2), and the first element part (1) and the second element part (2) together form an open and a closed end of the fastening element, **characterised in that** holding means (31; 32; 33) are formed in at least one of the two element parts, onto which holding means the airbag can be securely hooked.

2. Fastening element according to claim 1, **characterised in that** the two element parts (1, 2) are connected to one another at the closed end by two extension pieces (41, 42; 43, 44) which are of substantially identical shape and form a common edge (5).

3. Fastening element according to claim 1 or 2, **characterised in that** the two extension pieces (41, 42) are substantially flat and are provided with a bore (6) which passes through both extension pieces, wherein the extension piece (41) of the first element part (1) has a tongue (7) which projects from the fastening element and extends along a plane that is substantially parallel to the first element part (1), and the tongue (7) is provided with a cage nut (8) on the side facing away from the other extension piece (42).

4. Fastening element according to claim 3, **characterised in that** the first element part (1) has a latching tongue (9) facing away from the second element part (2) and extending away from the cage nut (8).

5. Fastening element according to claim 3 or 4, **characterised in that** the first element part (1) is angled away from the second element part (2) at the open end of the fastening element.

6. Fastening element according to one of claims 3 to 5, **characterised in that** the first element part (1) has two protrusions (32) directed towards the second element part (2), which protrusions, once an airbag has been inserted in the fastening element and once the two element parts (1, 2) have been pressed together, engage in two corresponding cutouts (23) of the second element part (2) and can be bent for the purpose of holding together the two element parts.

7. Fastening element according to one of claims 3 to 5, **characterised in that** the second element part (2) has at least two protrusions (31) directed towards the first element part (1), which protrusions, once an airbag has been inserted in the fastening element and once the two element parts (1, 2) have been pressed together, bear firmly against the first element part (1).

8. Fastening element according to claim 1 or 2, **characterised in that** it comprises at the open end a latching clip (10) which prolongs the first element part (1) in an angled manner and which is directed away from the second element part (2), and **in that** the two extension pieces (43, 44) of the first (1) and of the second (2) element part each have a portion (11, 12), of which at least the portion (11) of the extension piece (43) of the first element part (1), once the fastening element has been attached to the body, extends in a plane parallel to the first element part (1).

9. Fastening element according to claim 8, **characterised in that** the first element part (1) and the second element part (2) have a latching tongue (33, 22) in a region adjoining the respective extension piece, wherein the two latching tongues are shaped in such a way that together they form a latching mechanism which holds together the two element parts (1, 2) once an airbag has been inserted in the fastening element and once the two element parts have been pressed together.

10. Fastening element according to claim 8 or 9, **characterised in that** the first element part (1) has, in a region adjoining the associated extension piece (43), a first latching tongue (33) which is bent towards the second element part (2), and **in that** the second element part (2) has, in a region adjoining the associated extension piece, a second latching tongue (22) extending towards this extension piece and an opening (24) for the passage of the first latching tongue (33), wherein the two latching tongues (33, 22) are shaped in such a way that together they form a latching mechanism which holds together the two element parts (1, 2) once an airbag has been inserted in the fastening element and once the two element parts have been pressed together.

11. Fastening element according to one of claims 8 to 10, **characterised in that** it has at the closed end a locking tongue (13) which extends beyond the common edge (5) and which is angled towards the side of the first element part (1) facing away from the second element part (2), which locking tongue prevents a cover covering the airbag from being able to be placed onto the body if the fastening element is mounted incorrectly.

12. Fastening element according to one of claims 1 to 11, **characterised in that** the second element part (2) has longitudinal edges which run from the open end to the closed end of the fastening element and which are gentle on an airbag inserted in the fastening element, that is to say at least have flanges (21) which are free of burrs or are directed away from the first element part (1).

13. Fastening element according to one of claims 1 to 12, **characterised in that** it is a one-piece fastening element punched out of a metal sheet and obtained by folding.

14. Fastening element according to one of claims 1 to 12, **characterised in that** it is a one-piece fastening element obtained by means of a plastic injection moulding process.

15. Fastening element according to one of claims 1 to 12, **characterised in that** one of the two element parts (1, 2), that is to say the first or the second element part, is made of plastic, and **in that** the other element part, that is to say the second or the first element part, is made of metal.

## Revendications

1. Élément de fixation pour fixer et maintenir un airbag à une carrosserie automobile, ledit élément de fixation comportant une première partie d'élément (1) sensiblement plate, destinée à la fixation indirecte de l'airbag à la carrosserie automobile, et une deuxième partie d'élément (2) sensiblement en forme d'étrier, disposée au-dessus de ladite première partie d'élément et destinée à maintenir l'airbag entre les deux parties d'élément (1, 2), et la première partie d'élément (1) et la deuxième partie d'élément (2) formant conjointement une extrémité ouverte et une extrémité fermée de l'élément de fixation, **caractérisé en ce que** des moyens de fixation (31 ; 32 ; 33), auxquels l'airbag peut être accroché de manière imperdable, sont réalisés dans au moins une des deux parties d'élément.

2. Élément de fixation selon la revendication 1, **caractérisé en ce que** les deux parties d'élément (1, 2) sont reliées l'une à l'autre au niveau de l'extrémité fermée par l'intermédiaire de deux saillies (41, 42 ; 43, 44) sensiblement identiques et formant un rebord (5) commun.

3. Élément de fixation selon la revendication 1 ou 2, **caractérisé en ce que** les deux saillies (41, 42) sont sensiblement plates et sont munies d'une forure (6) traversant de part en part lesdites deux saillies, la saillie (41) de la première partie d'élément (1) comportant une patte (7), s'engageant en saillie hors de l'élément de fixation et s'étendant sur un plan sensiblement parallèle à la première partie d'élément (1), et ladite patte (7) étant munie d'un écrou de type cage (8) sur le côté détourné de l'autre saillie (42).

4. Élément de fixation selon la revendication 3, **caractérisé en ce que** la première partie d'élément (1) comporte une patte d'encliquetage (9), détournée de la deuxième partie d'élément (2) et s'étendant dans le sens opposé à l'écrou de type cage (8).

5. Élément de fixation selon la revendication 3 ou 4, **caractérisé en ce que** la première partie d'élément (1), au niveau de l'extrémité ouverte de l'élément de fixation, forme un coude orienté dans le sens opposé à la deuxième partie d'élément (2).

6. Élément de fixation selon l'une quelconque des revendications 3 à 5, **caractérisé en ce que** la première partie d'élément (1) comporte deux ergots (32) orientés vers la deuxième partie d'élément (2), lesquels, après la mise en place d'un airbag dans l'élément de fixation et après le serrage des deux parties d'élément (1, 2), s'engagent dans deux échancrures (23) correspondantes de la deuxième partie d'élément (2) et sont aptes à être pliés afin de maintenir ensemble les deux parties d'élément.

7. Élément de fixation selon l'une quelconque des revendications 3 à 5, **caractérisé en ce que** la deuxième partie d'élément (2) comporte au moins deux ergots (31) orientés vers la première partie d'élément (1), lesquels sont en appui fixe sur la première partie d'élément (1) après la mise en place d'un airbag dans l'élément de fixation et après le serrage des deux parties d'élément (1, 2).

8. Élément de fixation selon la revendication 1 ou 2, **caractérisé en ce qu'**il comporte, au niveau de l'extrémité ouverte, une bride de serrage (10), qui est pliée dans le prolongement de la première partie d'élément (1) et qui est orientée dans le sens opposé à la deuxième partie d'élément (2), et **en ce que** les deux saillies (43, 44) de la première (1) et de la deuxième (2) partie d'élément comportent chacune un tronçon (11, 12), dont au moins le tronçon (11) de la saillie (43) de la première partie d'élément (1) s'étend dans un plan parallèle à la première partie d'élément (1), après la mise en place de l'élément de fixation sur la carrosserie.

9. Élément de fixation selon la revendication 8, **caractérisé en ce que** la première partie d'élément (1) et la deuxième partie d'élément (2) comportent une patte d'encliquetage (33, 22) dans une zone adjacente à la saillie respective, lesdites deux pattes d'encliquetage étant formées de telle sorte que, après la mise en place d'un airbag dans l'élément de fixation et après le serrage des deux parties d'élément, elles forment conjointement un encliquetage, par lequel les deux parties d'élément (1, 2) sont maintenues ensemble.

10. Élément de fixation selon la revendication 8 ou 9, **caractérisé en ce que** la première partie d'élément (1) comporte, dans une zone adjacente à la saillie (43) associée, une première patte d'encliquetage (33), qui est coudée vers la deuxième partie d'élément (2), et **en ce que** la deuxième partie d'élément (2) comporte, dans une zone adjacente à la saillie associée, une deuxième patte d'encliquetage (22), s'étendant vers ladite saillie, et une ouverture (24) pour le passage de la première patte d'encliquetage (33), les deux pattes d'encliquetage (33, 22) étant formées de telle sorte que, après la mise en place d'un airbag dans l'élément de fixation et après le serrage des deux parties d'élément, elles forment conjointement un encliquetage, par lequel les deux parties d'élément (1, 2) sont maintenues ensemble.

11. Élément de fixation selon l'une quelconque des revendications 8 à 10, **caractérisé en ce qu'**il comporte, au niveau de l'extrémité fermée, une languette de blocage (13), qui s'étend au-delà du rebord (5) commun et est coudée vers le côté de la première partie d'élément (1), détourné de la deuxième partie d'élément (2), et qui, en cas de montage incorrect de l'élément de fixation, empêche qu'un cache masquant l'airbag puisse être posé sur la carrosserie.

12. Élément de fixation selon l'une quelconque des revendications 1 à 11, **caractérisé en ce que** la deuxième partie d'élément (2) comporte des bords longitudinaux, qui s'étendent depuis l'extrémité ouverte vers l'extrémité fermée de l'élément de fixation et sont munis de bords sertis (21) n'endommageant pas un airbag mis en place dans l'élément de fixation, donc au moins sans bavures ou orientés dans le sens opposé à la première partie d'élément (1).

13. Élément de fixation selon l'une quelconque des revendications 1 à 12, **caractérisé en ce qu'**il s'agit d'un élément de fixation d'un seul tenant, découpé dans une tôle métallique et obtenu par pliage.

14. Élément de fixation selon l'une quelconque des revendications 1 à 12, **caractérisé en ce qu'**il s'agit d'un élément de fixation d'un seul tenant, obtenu par un procédé de moulage par injection de matière plastique.

15. Élément de fixation selon l'une quelconque des revendications 1 à 12, **caractérisé en ce que** l'une des deux parties d'élément (1, 2), à savoir la première ou la deuxième partie d'élément, est réalisée en matière plastique, et **en ce que** l'autre partie d'élément, à savoir la deuxième ou la première partie d'élément, est réalisée en métal.
